# EUROPÄISCHE PATENTSCHRIFT

(11) **EP 2 118 460 B1**
(45) Veröffentlichungstag und Bekanntmachung des Hinweises auf die Patenterteilung: **24.03.2010**
(21) Anmeldenummer: 07846612.5
(22) Anmeldetag: 16.11.2007
(51) Int. Cl.: F01N 3/18, B01D 53/94, F02M 25/00

(54) **VERFAHREN UND VORRICHTUNG ZUR ERZEUGUNG VON AMMONIAK FÜR DIE ABGASBEHANDLUNG BEI BRENNKRAFTMASCHINEN IN EINEM KRAFTFAHRZEUG**
METHOD AND DEVICE FOR PRODUCING AMMONIA FOR THE EXHAUST GAS TREATMENT IN INTERNAL COMBUSTION ENGINES IN A MOTOR VEHICLE
PROCÉDÉ ET DISPOSITIF DE PRODUCTION D'AMMONIAC POUR LE TRAITEMENT DES GAZ D'ÉCHAPPEMENT DE MOTEURS À COMBUSTION INTERNE DANS UN VÉHICULE AUTOMOBILE

(30) Priorität: 16.02.2007 DE 102007008577
(43) Veröffentlichungstag der Anmeldung: 18.11.2009
(73) Patentinhaber: AUDI AG, 85045 Ingolstadt (DE)
(72) Erfinder: KOPP, Andre, 74172 Neckarsulm (DE)
(74) Vertreter: Krah, Annette
(86) Internationale Anmeldenummer: PCT/EP2007/009899
(87) Internationale Veröffentlichungsnummer: WO 2008/098598

(56) Entgegenhaltungen:
- EP-A- 1 149 622
- DE-A1- 19 903 533

## Beschreibung

Die vorliegende Erfindung betrifft ein Verfahren zur Erzeugung von Ammoniak für die Abgasbehandlung bei Brennkraftmaschinen in einem Kraftfahrzeug und eine Vorrichtung zur Durchführung des Verfahrens.

Durch gesetzliche Vorgaben werden unter anderem die zulässigen Grenzwerte für Stickoxide im Abgas von Brennkraftmaschinen immer weiter herabgesetzt. Um diesen Anforderungen zu begegnen ist es bekannt, dem Abgas Ammoniak (NH₃) zuzugeben, um die darin enthaltenen Stickoxide (NO und NO₂) in die umweltfreundlichen Verbindungen Stickstoff (N₂) und Wasser (H₂O) umzuwandeln.

Grundsätzlich können Ammoniak oder Ammoniakvorstufen, wie Harnstoff oder Ammoniakcarbamat für die Abgasbehandlung von Kraftfahrzeugen mittels eines speziellen Behälters bereitgestellt werden. Zur Bereitstellung einer für die gesamte Lebensdauer des Kraftfahrzeugs ausreichenden Menge an Ammoniak muss dieser Behälter sehr groß sein. In der Regel ist dafür aber nicht genügend Platz verfügbar. Bei der Verwendung von kleineren Behältern, ist es notwendig diese zwischendurch erneut zu befüllen. Bei der Befüllung der Behälter ist zu beachten, dass diese Arbeit von Fachwerkstätten ausgeführt werden muss, um Vergiftungen oder Geruchsbelästigungen auszuschließen.

Darüber hinaus kann Ammoniak aber auch direkt an Bord eines Kraftfahrzeuges erzeugt werden. So sind aus den Druckschriften DE 103 37 901 A1 und DE 199 03 533 A1 Verfahren zur Synthese von Ammoniak mittels eines im Abgasstrang der Brennkraftmaschine angeordneten plasmakatalytischen Reaktors beschrieben. Diese Syntheseverfahren sind aber verhältnismäßig aufwändig, störanfällig und zudem teuer.

Schließlich ist aus der Druckschrift DE 196 54 977 C2 ein Verfahren zur Reduktion von Stickoxiden und Schwarzrauch bekannt. Dazu wird bei einem mager betriebenen Dieselmotor Wasser in den Brennraum eingespritzt. Durch die Verdampfung des injizierten Wassers werden die Verbrennungstemperaturen gesenkt, so dass weniger Stickoxide entstehen. Das einzuspritzende Wasser wird dort aus dem Abgas des Dieselmotors gewonnen.

Ferner ist auch aus der Druckschrift DE 196 48 219 C1 eine Vorrichtung zur Abtrennung von Wasser aus Verbrennungsabgasen bekannt. Das so gewonnene Wasser ist auf unterschiedlichste Art verwendbar, wodurch in einem Fahrzeug die Mitführung separater Wassertanks entfallen kann.

Vor diesem Hintergrund ist es Aufgabe der vorliegenden Erfindung, ein verbessertes Verfahren zur Erzeugung von Ammoniak für die Abgasbehandlung bei Brennkraftmaschinen in einem Kraftfahrzeug bereitzustellen. Darüber hinaus ist es Aufgabe der Erfindung auch eine Vorrichtung zur Durchführung des Verfahrens zu schaffen.

Verfahrensgemäß wird diese Aufgabe gelöst, indem die Brennkraftmaschine mit einem Luft/Kraftstoffverhältnis 2, < 1,0 - also fett - betrieben wird, dem der Brennkraftmaschine zu geführten Luft/Kraftstoffgemisch Wasser zugegeben wird, um das für die Abgasbehandlung erforderliche Ammoniak an Bord des Fahrzeuges zu erzeugen. Bei Luftmangel ist gewährleistet, dass eine ausreichende Menge an Wasserstoff im Brennraum entsteht, welche speziell im fetten Betrieb der Brennkraftmaschine mit dem im Abgasstrom vorhandenen oder gespeicherten Stickoxiden zu Ammoniak gewandelt wird. Somit wird durch diese Merkmalskombination auf einfache und dennoch sehr effektive Weise über verschiedene nacheinander ablaufende Reaktionen des Gemisches bzw. des Abgases schließlich Ammoniak gebildet, welches für die Schadstoffreduzierung verwendbar ist.

Vorteilhaft wird die Menge des zugegebenen Wassers in Abhängigkeit von dem der Brennkraftmaschine zugeführten Luft/Kraftstoffverhältnis λ bestimmt. Denn durch das Luft/Kraftstoffverhältnis wird die Menge der im Abgas entstehenden und zu konvertierenden Stickoxide beeinflusst.

Alternativ oder ergänzend kann die Menge des zugegebenen Wassers auch in Abhängigkeit von dem Signal eines im Abgasstrang angeordneten Stickoxid-Sensors bestimmt werden.

Bevorzugt wird nach der erfolgten Abgasbehandlung mit Ammoniak Wasser aus dem Abgas rückgeführt, wobei das in das Luft/Kraftstoffgemisch zugegebene Wasser durch das aus dem Abgas rückgeführte Wasser gespeist wird. Auf diese Weise wird ein geschlossener Kreislauf gebildet, so dass die Versorgung mit Wasser zu jedem Zeitpunkt sichergestellt ist.

Besonders bevorzugt wird das aus dem Abgas rückgeführte Wasser durch einen Kondensationsvorgang gewonnen. Dazu wird das Abgas durch einen Wärmetauscher bis unterhalb des Taupunktes gekühlt und wird das abgeschiedene Wasser aufgefangen und gespeichert oder weitergeleitet.

Zweckmäßig ist die Menge des aus dem Abgas rückgeführten Wassers größer oder gleich der Menge an zugegebenem Wasser. Somit wird gewährleistet, dass für die Zugabe von Wasser in das Luft/Kraftstoffgemisch stets eine ausreichende Menge zur Verfügung steht.

Vorrichtungsgemäß wird die Aufgabe gelöst, indem bei der mit einer Einrichtung zur Bestimmung des Luft/Kraftstoffverhältnisses λ des der Brennkraftmaschine zugeführten Luft/Kraftstoffgemisches ausgestatteten Vorrichtung eine Zugabeeinrichtung für die Zugabe von Wasser zu dem Luft/Kraftstoffgemisch vorgesehen ist, um das für die Abgasbehandlung erforderliche Ammoniak an Bord des Kraftfahrzeuges zu erzeugen, wobei die Zugabeeinrichtung in Abhängigkeit von dem bestimmten Luft/Kraftstoffverhältnis λ arbeitet. Mittels dieser Merkmale kann auf separate Speichereinrichtungen für Ammoniak oder Ammoniakvorstufen sowie auf aufwändige Generatoren zur Ammoniakerzeugung verzichtet werden. Zudem erlaubt diese Steuerung eine optimale Dosierung des Wassers, so dass einerseits eine auseichende Menge an Ammoniak gebildet wird und andererseits der Verbrennungsprozess innerhalb der Brennkraftmaschine nur so wenig wie nötig beeinträchtigt wird.

Darüber hinaus kann die Zugabeeinrichtung in Abhängigkeit von dem Signal eines im Abgasstrang angeordneten Stickoxid-Sensors steuerbar sein, um auch das dynamische Verhalten des NOₓ-Speicherkatalysators zu berücksichtigen und somit eine noch präzisere Dosierung des zugegebenen Wassers zu erzielen.

Die Zugabeeinrichtung ist stromauf der Brennkraftmaschine im Unterdruckbereich angekoppelt, um die Zugabe des Wassers in das Luft/Kraftstoffgemisch zu erleichtern und um eine möglichst homogene Durchmischung von Wasser und Luft/Kraftstoffgemisch zu erreichen, wodurch die Bildung von Ammoniak wirkungsvoll unterstützt wird.

Die Abgasbehandlung des mit Ammoniak versetzten Abgases erfolgt zweckmäßig durch einen Russfilter, einen NOₓ Speicherkatalysator und einen SCR-Katalysator, die nacheinander im Abgasstrang der Brennkraftmaschine angeordnet sind.

Ist außerdem eine Rückführungseinrichtung vorgesehen, um stromab der Abgasbehandlung mit Ammoniak Wasser aus dem Abgas der Brennkraftmaschine Wasser zurückzuführen, so kann die Zugabeeinrichtung von der Rückführeinrichtung gespeist werden. Dadurch entfällt die Notwendigkeit für einen separaten Speicherbehälter für Wasser. Die Rückführung von Wasser kann dabei sowohl während des fetten Betriebs als auch während des mageren Betriebs der Brennkraftmaschine stattfinden.

Weiterbildungsgemäß ist diese Rückführeinrichtung an den Abgasstrang der Brennkraftmaschine angekoppelt und als eine Kondensationseinrichtung ausgebildet. Eine solche Kondensationseinrichtung umfasst einen Wärmetauscher, der auch in einem der Abgasbehandlungseinrichtung nachgeschalteten Bereich noch einwandfrei arbeitet.

Besonders vorteilhaft ist die Rückführeinrichtung in Abhängigkeit von der Zugabeeinrichtung steuerbar. Denn die Zuführeinrichtung gibt an, wie viel Wasser zugegeben wird, so dass sich daraus ergibt, wie viel Wasser zur Speisung der Zugabeeinrichtung benötigt wird. Überschüssiges Wasser kann direkt vermieden werden, indem der Wärmetauscher in seiner Leistung gedrosselt oder abgeschaltet wird. Alternativ könnte überschüssiges Wasser aber auch einfach an die Umgebung abgegeben werden, da dies keine Umweltbelastung darstellt.

Ergänzend oder alternativ kann die Rückführeinrichtung aber auch einen Vorratsbehälter mit einer Füllstandseinrichtung aufweisen und in Abhängigkeit von der Füllstandseinrichtung steuerbar sein. Ein solcher Vorratsbehälter mit einer Füllstandseinrichtung stellt für die Wasserversorgung einen gewissen Puffer dar und ist außerdem auch kostengünstig realisierbar.

Die vorliegende Erfindung wird unter Bezugnahme auf die beiden nachfolgenden Zeichnungsfiguren näher erläutert. Es zeigen:
- Fig. 1: ein vereinfachtes Flussdiagramm des Verfahrens zur Erzeugung von Ammoniak für die Abgasbehandlung; und
- Fig. 2: eine schematische Darstellung eines Kraftfahrzeugs mit einer Vorrichtung zur Durchführung des Verfahrens aus Fig. 1.

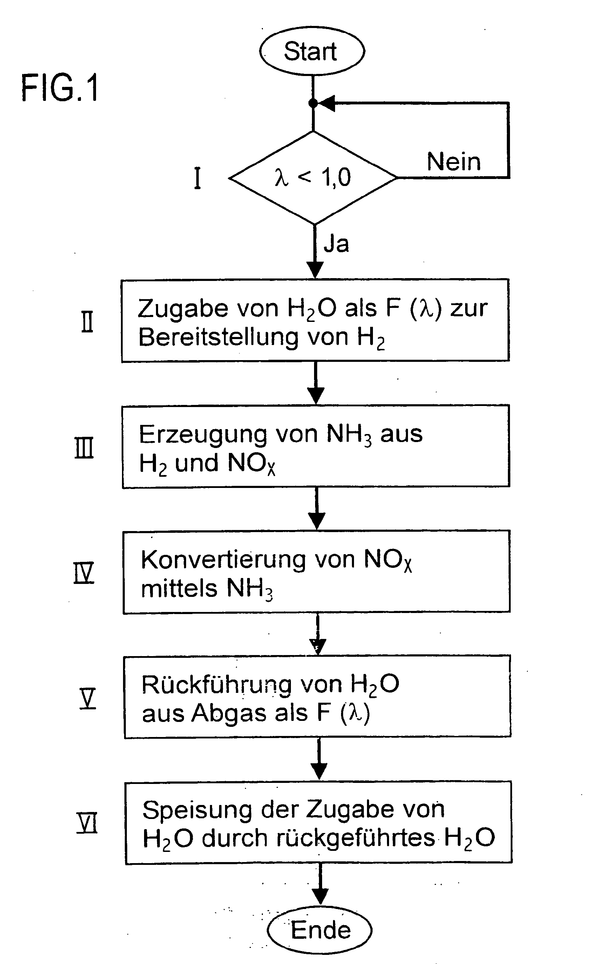

Das in Fig. 1 gezeigte Verfahren sieht vor, dass die Brennkraftmaschine 2 mit Luftmangel betrieben wird und dass dem zugeführten Luft/Kraftstoffgemisch Wasser H₂O zugegeben wird, um das für die Abgasbehandlung erforderliche Ammoniak NH₃ zu erzeugen.

Dazu wird im ersten Schritt I des Verfahrens überprüft, ob das Luft/Kraftstoffverhältnis λ < 1,0 ist. Ist dies der Fall, so wird dem Luft/Kraftstoffgemisch im zweiten Schritt II in Abhängigkeit vom tatsächlichen Luft/Kraftstoffverhältnis λ Wasser zugegeben, so dass anhand der nachfolgenden chemischen Reaktionen

H₂O + CO ---> H₂ + CO₂

4xH₂O + H_{y}Cₓ ---> 4x+yH₂ + 2xCO₂

zunächst eine erhöhte Menge an Wasserstoff H₂ bereitgestellt wird. Anschießend wird im Abgasstrang der Brennkraftmaschine 2 durch die Reaktion des Wasserstoffs H₂ mit im Abgas enthaltenen Stickoxiden NOₓ anhand der Folgereaktion

H₂ + NO + NO₂ ---> H₂O + NH₃

Ammoniak NH₃ erzeugt. Dies ist im Flussdiagramm durch Schritt III veranschaulicht. Mittels des so erzeugten Ammoniaks NH₃ wird schließlich die Konvertierung der verbleibenden Stickoxide NOₓ durchgeführt, wobei gemäß der Reaktion

NH₃ + NO + NO₂ ---> H₂O + N₂

Wasser H₂O und Stickstoff N₂ erzeugt wird, was in Fig. 1 dem Schritt IV entspricht. Nach der Abgasbehandlung wird das gereinigte warme Abgas zum Beispiel mittels einer Wärmetauschereinrichtung unter den Taupunkt abgekühlt und wird aus dem Abgas somit Wasser H₂O abgeschieden. Diese Rückführung von Wasser H₂O, welche idealerweise in Abhängigkeit von dem zugeführten Luft/Kraftstoffverhältnis λ, oder dem Signal eines im Abgasstrang 4 angeordneten Stickoxid-Sensors erfolgt, entspricht dem Schritt V des gezeigten Verfahrens. Schließlich wird das rückgeführte Wasser H₂O gemäß Schritt VI zur Speisung der Zugabe von Wasser H₂O verwendet.

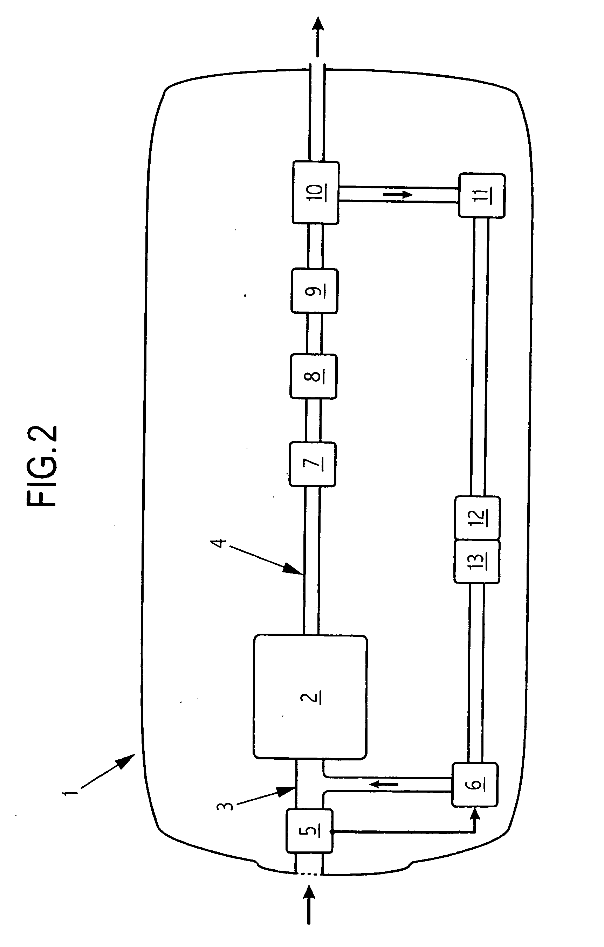

Fig. 2 zeigt ein Kraftfahrzeug 1, das eine Brennkraftmaschine 2 mit einem Ansaugstrang 3 und einem Abgasstrang 4 aufweist.

Im Ansaugstrang 3 der Brennkraftmaschine 2 ist eine Einrichtung 5 zur Bestimmung bzw. Regelung des Luft/Kraftstoffverhältnisses λ des der Brennkraftmaschine 2 zugeführten Luft/-Kraftstoffgemisches angeordnet. Diese Einrichtung 5 ist mit dem Steuergerät des Kraftfahrzeuges 1 sowie gegebenenfalls mit einer im Abgasstrang 4 angeordneten Lambda-Sonde gekoppelt und steuert die Drosselklappe für Frischluft, die Einspritzanlage für Kraftstoff sowie gegebenenfalls auch die Abgasrückführung.

Eine Zugabeeinrichtung 6 für Wasser ist an den Ansaugstrang 3 oder direkt an die Brennräume der Brennkraftmaschine 2 angekoppelt, um das Wasser im Unterdruckbereich, das heißt zum Beispiel stromab der nicht dargestellten Drosselklappe in das Luft/Kraftstoffgemisch einzuleiten. Die Zugabeeinrichtung 6 weist eine Steuerung auf, damit die Menge des zugegebenen Wassers in Abhängigkeit von dem durch die Einrichtung 5 bestimmten Luft/Kraftstoffverhältnis λ gesteuert wird, um letztlich eine für die Abgasbehandlung optimierte Menge an Ammoniak bereitzustellen.

Im Abgasstrang 4 der Brennkraftmaschine 2 sind nacheinander ein Russfilter 7, ein NOₓ-Speicherkatalysator 8 und ein SCR-Katalysator 9 (Selective Catalytic Reduction), angeordnet. Mittels dieser Anordnung zur Abgasbehandlung wird Russ ausgefiltert und werden Stickoxide eingespeichert bzw. abgegeben und konvertiert.

Für die Speisung der Zugabeeinrichtung 6 ist stromab der Brennkraftmaschine 2 zudem eine Rückführeinrichtung 10 vorgesehen, welche im Anschluss an die erfolgte Abgasbehandlung mit Ammoniak Wasser aus dem Abgas rückführt. Das so gewonnene Wasser wird der Zugabeeinrichtung 6 zugeleitet, wobei darauf geachtet wird, dass die Menge des rückgewonnenen Wassers etwa gleich der Menge des zugegebenen Wassers ist. Damit diese Menge des rückgeführten Wassers die Menge des zugegebenen Wassers nicht oder nur wenig überschreitet, kann die Rückführeinrichtung 10, welche beispielsweise als ein Wärmetauscher ausgebildet ist, in ihrer Leistung gedrosselt oder abgeschaltet werden.

Damit das Wasser von der Rückführeinrichtung 10 zu der Zugabeeinrichtung 6 gefördert verwendet werden kann, ist außerdem eine Pumpeinrichtung 11 vorgesehen.

In Fig. 2 ist zudem ein Vorratsbehälter 12 gezeigt, der als Puffer dient. Der Vorratsbehälter 12 kann auch eine Füllstandseinrichtung 13 aufweisen, so dass die Rückführeinrichtung 10 einfach in Abhängigkeit von der Füllstandseinrichtung 13 gesteuert wird.

### Liste der Bezugszeichen:

- 1: Kraftfahrzeug
- 2: Brennkraftmaschine
- 3: Ansaugstrang
- 4: Abgasstrang
- 5: Einrichtung zur Bestimmung bzw. Regelung von λ
- 6: Zugabeeinrichtung
- 7: Russfilter
- 8: NOₓ-Speicherkatalysator
- 9: SCR-Katalysator
- 10: Rückführeinrichtung
- 11: Pumpeinrichtung
- 12: Vorratsbehälter
- 13: Füllstandseinrichtung

## Patentansprüche

1. Verfahren zur Erzeugung von Ammoniak für die Abgasbehandlung bei Brennkraftmaschinen in einem Kraftfahrzeug,
**dadurch gekennzeichnet, dass**
die Brennkraftmaschine (2) mit einem Luft/Kraftstoffverhältnis λ, < 1,0 betrieben wird und dem der Brennkraftmaschine (2) zugeführten Luft/Kraftstoffgemisch Wasser zugegeben wird, um das für die Abgasbehandlung erforderliche Ammoniak an Bord des Kraftfahrzeuges (1) zu erzeugen.

2. Verfahren nach Anspruch 1, **dadurch gekennzeichnet, dass** die Menge des zugegebenen Wassers in Abhängigkeit von dem der Brennkraftmaschine (2) zugeführten Luft/Kraftstoffverhältnis λ, bestimmt wird.

3. Verfahren nach Anspruch 1 oder 2, **dadurch gekennzeichnet, dass** die Menge des zugegebenen Wassers in Abhängigkeit von dem Signal eines im Abgasstrang (4) angeordneten Stickoxid-Sensors bestimmt wird.

4. Verfahren nach einem der Ansprüche 1 bis 3, **dadurch gekennzeichnet, dass** nach der erfolgten Abgasbehandlung mit Ammoniak Wasser aus dem Abgas rückgeführt wird und zur Speisung des in das Luft/Kraftstoffgemisch zugegebenen Wassers verwendet wird.

5. Verfahren nach einem der Ansprüche 1 bis 4, **dadurch gekennzeichnet, dass** das aus dem Abgas rückgeführte Wasser durch einen Kondensationsvorgang gewonnen wird.

6. Verfahren nach einem der Ansprüche 1 bis 5, **dadurch gekennzeichnet, dass** die Menge des rückgeführten Wassers größer oder gleich der Menge des zugegebenen Wassers ist.

7. Vorrichtung zur Durchführung des Verfahrens zur Erzeugung von Ammoniak für die Abgasbehandlung bei Brennkraftmaschinen (2) in einem Kraftfahrzeug (1) nach einem der Ansprüche 1 bis 5, mit einer Einrichtung (5) zur Bestimmung des Luft/Kraftstoffverhältnisses λ des der Brennkraftmaschine (2) zugeführten Luft/Kraftstoffgemisches und
**dadurch gekennzeichnet, dass**
eine Zugabeeinrichtung (6) für die Zugabe von Wasser zu dem Luft/Kraftstoffgemisch vorgesehen ist, um das für die Abgasbehandlung erforderliche Ammoniak an Bord des Kraftfahrzeuges (1) zu erzeugen,
wobei die Zugabeeinrichtung (6) in Abhängigkeit von dem bestimmten Luft/Kraftstoffverhältnis λ steuerbar ist.

8. Vorrichtung nach Anspruch 7, **dadurch gekennzeichnet, dass** die Zugabeeinrichtung (6) zudem in Abhängigkeit von dem Signal eines im Abgasstrang (4) angeordneten Stickoxid-Sensors steuerbar ist.

9. Vorrichtung nach Anspruch 7 oder 8, **dadurch gekennzeichnet, dass** die Zugabeeinrichtung (6) stromauf der Brennkraftmaschine (2) im Unterdruckbereich angekoppelt ist.

10. Vorrichtung nach einem der Ansprüche 7 bis 9, **dadurch gekennzeichnet, dass** die Abgasbehandlung des mit Ammoniak versetzten Abgases zweckmäßig durch einen Russfilter (7), einen NOₓ-Speicherkatalysator (8) und einen SCR-Katalysator (9) erfolgt, die nacheinander im Abgasstrang (4) der Brennkraftmaschine (2) angeordnet sind.

11. Vorrichtung nach einem der Ansprüche 7 bis 10, **dadurch gekennzeichnet, dass** eine Rückführeinrichtung (10) vorgesehen ist, um stromab der Abgasbehandlung mit Ammoniak aus dem Abgas der Brennkraftmaschine (2) Wasser rückzuführen, wobei die Zugabeeinrichtung (6) von der Rückführeinrichtung (10) gespeist ist.

12. Vorrichtung nach Anspruch 11, **dadurch gekennzeichnet, dass** die Rückführeinrichtung (10) an den Abgasstrang (4) der Brennkraftmaschine (2) angekoppelt ist.

13. Verfahren nach einem der Ansprüche 11 oder 12, **dadurch gekennzeichnet, dass** die Rückführeinrichtung (10) als eine Kondensationseinrichtung ausgebildet ist.

14. Vorrichtung nach einem der Ansprüche 11 bis 13, **dadurch gekennzeichnet, dass** die Rückführeinrichtung (10) in Abhängigkeit von der Zugabeeinrichtung (6) steuerbar ist.

15. Vorrichtung nach einem der Ansprüche 10 bis 14, **dadurch gekennzeichnet, dass** die Rückführeinrichtung (10) einen Vorratsbehälter (12) mit einer Füllstandseinrichtung (13) aufweist und in Abhängigkeit von der Füllstandseinrichtung (13) steuerbar ist.

## Claims

1. Method for producing ammonia for the exhaust gas treatment in internal combustion engines in a motor vehicle,
**characterized in that**
the internal combustion engine (2) is operated with an air/fuel ratio λ < 1.0 and the air/fuel mixture which is supplied to the internal combustion engine (2) has water added to it such that the ammonia required for the exhaust gas treatment is produced on board the motor vehicle (1).

2. Method according to Claim 1, **characterized in that** the quantity of water added is determined as a function of the air/fuel ratio λ supplied to the internal combustion engine (2).

3. Method according to Claim 1 or 2, **characterized in that** the quantity of water added is determined as a function of the signal of a nitrogen oxide sensor arranged in the exhaust section (4).

4. Method according to one of Claims 1 to 3, **characterized in that**, after the exhaust gas treatment with ammonia has taken place, water from the exhaust gas is recirculated and used for feeding the water which is added into the air/fuel mixture.

5. Method according to one of Claims 1 to 4, **characterized in that** the water recirculated from the exhaust gas is obtained by means of a condensation process.

6. Method according to one of Claims 1 to 5, **characterized in that** the quantity of water recirculated is greater than or equal to the quantity of water added.

7. Apparatus for carrying out the method for producing ammonia for the exhaust gas treatment in internal combustion engines (2) in a motor vehicle (1) according to one of Claims 1 to 5, having a device (5) for determining the air/fuel ratio λ of the air/fuel mixture supplied to the internal combustion engine (2), and
**characterized in that**
an adding device (6) for adding water to the air/fuel mixture is provided in order to produce, on board the motor vehicle (1), the ammonia required for the exhaust gas treatment,
with the adding device (6) being controllable as a function of the determined air/fuel ratio λ.

8. Apparatus according to Claim 7, **characterized in that** the adding device (6) is also controllable as a function of the signal of a nitrogen oxide sensor arranged in the exhaust section (4).

9. Apparatus according to Claim 7 or 8, **characterized in that** the adding device (6) is coupled on in the negative pressure region upstream of the internal combustion engine (2).

10. Apparatus according to one of Claims 7 to 9, **characterized in that** the exhaust gas treatment of the exhaust gas with ammonia added thereto expediently takes place by means of a soot filter (7), a NOₓ accumulator catalytic converter (8) and an SCR catalytic converter (9) which are arranged in series in the exhaust section (4) of the internal combustion engine (2).

11. Apparatus according to one of Claims 7 to 10, **characterized in that** a recirculation device (10) is provided in order, downstream of the exhaust gas treatment with ammonia, to recirculate water from the exhaust gas of the internal combustion engine (2), with the adding device (6) being fed by the recirculation device (10).

12. Apparatus according to Claim 11, **characterized in that** the recirculation device (10) is coupled to the exhaust section (4) of the internal combustion engine (2).

13. Apparatus according to one of Claims 11 or 12, **characterized in that** the recirculation device (10) is designed as a condensation device.

14. Apparatus according to one of Claims 11 to 13, **characterized in that** the recirculation device (10) is controllable as a function of the adding device (6).

15. Apparatus according to one of Claims 10 to 14, **characterized in that** the recirculation device (10) has a storage tank (12) with a filling level device (13) and is controllable as a function of the filling level device (13).

## Revendications

1. Procédé de production d'ammoniac pour le traitement de gaz d'échappement dans des moteurs à combustion interne d'un véhicule automobile,
**caractérisé en ce que**
le moteur à combustion interne (2) fonctionne avec un rapport air/carburant λ < 1,0, et l'on ajoute de l'eau au mélange air/carburant acheminé au moteur à combustion interne (2), afin de produire l'ammoniac nécessaire pour le traitement de gaz d'échappement à bord du véhicule automobile (1).

2. Procédé selon la revendication 1, **caractérisé en ce que** la quantité d'eau ajoutée est déterminée en fonction du rapport air/carburant λ acheminé au moteur à combustion interne (2).

3. Procédé selon la revendication 1 ou 2, **caractérisé en ce que** la quantité d'eau ajoutée est déterminée en fonction du signal d'un capteur d'oxyde d'azote disposé dans la ligne d'échappement (4).

4. Procédé selon l'une quelconque des revendications 1 à 3, **caractérisé en ce que** l'on fait recirculer de l'eau provenant du gaz d'échappement après la fin du traitement de gaz d'échappement avec de l'ammoniac, et on l'utilise pour l'alimentation en eau ajoutée au mélange air/carburant.

5. Procédé selon l'une quelconque des revendications 1 à 4, **caractérisé en ce que** l'eau recirculée provenant du gaz d'échappement est obtenue par une opération de condensation.

6. Procédé selon l'une quelconque des revendications 1 à 5, **caractérisé en ce que** la quantité d'eau recirculée est supérieure ou égale à la quantité d'eau ajoutée.

7. Dispositif pour mettre en oeuvre le procédé de production d'ammoniac pour le traitement de gaz d'échappement dans des moteurs à combustion interne (2) dans un véhicule automobile (1) selon l'une quelconque des revendications 1 à 5, comprenant un dispositif (5) pour déterminer le rapport air/carburant λ du mélange air/carburant acheminé au moteur à combustion interne (2) et
**caractérisé en ce que**
l'on prévoit un dispositif de dosage (6) pour ajouter de l'eau au mélange air/carburant afin de produire l'ammoniac nécessaire pour le traitement de gaz d'échappement à bord du véhicule automobile (1),
le dispositif de dosage (6) pouvant être commandé en fonction du rapport air/carburant λ déterminé.

8. Dispositif selon la revendication 7, **caractérisé en ce que** le dispositif de dosage (6) peut en outre être commandé en fonction du signal d'un détecteur d'oxyde d'azote disposé dans la ligne d'échappement (4).

9. Dispositif selon la revendication 7 ou 8, **caractérisé en ce que** le dispositif de dosage (6) est raccordé en amont du moteur à combustion interne (2) dans la région de la dépression.

10. Dispositif selon l'une quelconque des revendications 7 à 9, **caractérisé en ce que** le traitement de gaz d'échappement du gaz d'échappement mélangé à de l'ammoniac est effectué de manière approprié à travers un filtre à particules (7), un catalyseur à accumulation de NOₓ (8) et un catalyseur SCR (9), qui sont disposés les uns derrière les autres dans la ligne d'échappement (4) du moteur à combustion interne (2).

11. Dispositif selon l'une quelconque des revendications 7 à 10, **caractérisé en ce que** l'on prévoit un dispositif de recirculation (10) pour faire recirculer de l'eau provenant du gaz d'échappement du moteur à combustion interne (2) en aval du traitement de gaz d'échappement avec de l'ammoniac, le dispositif de dosage (6) étant alimenté par le dispositif de recirculation (10).

12. Dispositif selon la revendication 11, **caractérisé en ce que** le dispositif de recirculation (10) est raccordé à la ligne d'échappement (4) du moteur à combustion interne (2).

13. Dispositif selon l'une quelconque des revendications 11 ou 12, **caractérisé en ce que** le dispositif de recirculation (10) est réalisé sous forme de dispositif de condensation.

14. Dispositif selon l'une quelconque des revendications 11 à 13, **caractérisé en ce que** le dispositif de recirculation (10) peut être commandé en fonction du dispositif de dosage (6).

15. Dispositif selon l'une quelconque des revendications 10 à 14, **caractérisé en ce que** le dispositif de recirculation (10) présente un réservoir (12) avec un dispositif de niveau de remplissage (13) et peut être commandé en fonction du dispositif de niveau de remplissage (13).
